(19) 

**Europäisches Patentamt**
**European Patent Office**
**Office européen des brevets**

(11)     **EP 1 665 805 B1**

(12)     **EUROPÄISCHE PATENTSCHRIFT**

(45) Veröffentlichungstag und Bekanntmachung des Hinweises auf die Patenterteilung:
**01.09.2010   Patentblatt 2010/35**

(21) Anmeldenummer: **04766804.1**

(22) Anmeldetag: **16.09.2004**

(51) Int Cl.:
*H04N 7/26* (2006.01)          *H04N 7/34* (2006.01)
*G06T 9/00* (2006.01)

(86) Internationale Anmeldenummer:
**PCT/EP2004/052196**

(87) Internationale Veröffentlichungsnummer:
**WO 2005/029866 (31.03.2005 Gazette 2005/13)**

(54) **VERFAHREN ZUR TRANSCODIERUNG EINES DATENSTROMS, DER EIN ODER MEHRERE CODIERTE DIGITALISIERTE BILDER UMFASST MIT INTRA-PRÄDIKTIONSMODI**

METHOD FOR TRANSCODING A DATA STREAM COMPRISING ONE OR MORE CODED, DIGITISED IMAGES USING INTRA-PREDICTION MODES

PROCEDE POUR TRANSCODER UN FLUX DE DONNEES COMPRENANT UNE OU PLUSIEURS IMAGES NUMERISEES CODEES AVEC MODES DE INTRA-PRÉDICTION

(84) Benannte Vertragsstaaten:
**AT BE BG CH CY CZ DE DK EE ES FI FR GB GR HU IE IT LI LU MC NL PL PT RO SE SI SK TR**

(30) Priorität: **18.09.2003   DE 10343220**

(43) Veröffentlichungstag der Anmeldung:
**07.06.2006   Patentblatt 2006/23**

(73) Patentinhaber: **SIEMENS AKTIENGESELLSCHAFT 80333 München (DE)**

(72) Erfinder:
- **BIALKOWSKI, Jens-Günter 90425 Nürnberg (DE)**
- **KAUP, André 91090 Effeltrich (DE)**

(56) Entgegenhaltungen:
**US-A1- 2003 138 150**

- **WIEGAND T ET AL: "OVERVIEW OF THE H. 264/AVC VIDEO CODING STANDARD" IEEE TRANSACTIONS ON CIRCUITS AND SYSTEMS FOR VIDEO TECHNOLOGY, IEEE INC. NEW YORK, US, Bd. 13, Nr. 7, Juli 2003 (2003-07), Seiten 560-576, XP001169882 ISSN: 1051-8215**
- **TUDOR P N ET AL: "REAL-TIME TRANSCODING OF MPEG-2 VIDEO BIT STREAMS" INTERNATIONAL BROADCASTING CONVENTION, LONDON, GB, Nr. 447, September 1997 (1997-09), Seiten 296-301,COMPL, XP000668774 in der Anmeldung erwähnt**
- **"ITU-telecommunication standardization sector" ITU TELECOMMUNICATIONS STANDARDIZATION SECTOR STUDY GROUP 16, XX, XX, September 2001 (2001-09), Seiten 1-10, XP002969249**

EP 1 665 805 B1

**Beschreibung**

Verfahren zur Transcodierung eines Datenstroms, der ein oder mehrere codierte digitalisierte Bilder umfasst

Die Erfindung betrifft ein Verfahren zur Transcodierung eines Datenstroms sowie eine entsprechende Transcodiervorrichtung.

Videocodierverfahren bieten die Möglichkeit, große Datenmengen von Bildmaterial in unterschiedlicher Qualität und mit unterschiedlichen Datenraten zu komprimieren. Oft ist es hierbei notwendig, die Daten in veränderter Form an eine Übertragung oder an ein Endgerät anzupassen. Insbesondere kann es erforderlich sein, den Datenstrom eines Videocodierstandards in einen Datenstrom eines anderen Videocodierstandards umzuwandeln. Eine derartige Umwandlung des Datenstroms wird als Transcodierung bezeichnet.

Aus dem Stand der Technik sind Transcodierverfahren bekannt, bei denen ein Datenstrom vollständig decodiert wird und anschließend in einem neuen Codierstandard codiert wird. Diese Vorgehensweise führt zu Verlusten hinsichtlich der Qualität und ist auch durch die Decodierung und anschließende Neucodierung sehr komplex, was sich negativ auf die Dauer der Umwandlung des Datenstroms auswirkt.

Eine Verminderung der Komplexität gängiger Transcodierverfahren wird in den Dokumenten [1] und [2] durch die Verminderung des Berechnungsaufwandes für die Bewegungsschätzung erreicht. Bei den in diesen Dokumenten vorgeschlagenen Ansätzen werden die üblicherweise bei der Neucodierung verwendeten Prädiktionsvektoren, mit denen die Bewegung im Bild aus einem zeitlich vorangegangenen Bild prädiziert wird, nicht im gesamten Bild, sondern nur in einem stark verkleinerten Suchbereich neu geschätzt. Der reduzierte Suchbereich umfasst nur wenige Pixel bzw. nur Halbpixel- oder Viertelpixel-Umgebungen. Es hat sich gezeigt, dass sich hierdurch die Komplexität erheblich reduzieren lässt und gleichzeitig die Qualität des transcodierten Datenstroms nur geringfügig verschlechtert wird.

Die oben geschilderte Verbesserung bei Transcodierverfahren eignet sich insbesondere für Transcodierungen, die innerhalb des gleichen Kompressionsstandards stattfinden. Auch aus dem Dokument [3] ist ein Verfahren bekannt, bei dem eine Transcodierung in dem gleichen Kompressionsstandard ermöglicht wird, wobei die verwendeten Bewegungsvektoren zusätzlich noch entsprechend einer Änderung der Bildgröße skaliert werden und anschließend wiederum in einem verkleinerten Suchbereich neu geschätzt werden. Aus den Dokumenten [4] und [5] sind weitere Ansätze zur Transcodierung von einem Standard hin zu einem anderen Standard bekannt.

Aus dem Dokument Tudor et al., "Real-Time Transcoding of MPEG-2 Video Bit Streams", International Broadcasting Convention, London, GB, Nr. 447, September 1997, Seiten 296-301, IEE ist eine Methode zur Transcodierung von MPEG-2 Videoströmen in Echtzeit bekannt.

Die gängigen Verfahren nach dem Stand der Technik vereinfachen die Transcodierung des Datenstroms für Codierverfahren, bei denen eine zeitliche Prädiktion der Bildblöcke eines digitalisierten Bildes stattfindet. Neue Kompressionsverfahren verwenden jedoch zunehmend sog. Intra-Prädiktionsverfahren, bei denen innerhalb eines digitalisierten Bildes die einzelnen Bildblöcke aus bereits codierten Bildblöcken in dem gleichen Bild örtlich prädiziert werden. Mit einer solchen Intra-Prädiktion wird die Kompression weiter verbessert.

Bisher sind aus dem Stand der Technik keine Verfahren bekannt, mit denen eine aufwandsgünstige Transcodierung für einen Kompressionsstandard mit Intra-Prädiktion gewährleistet ist.

Aufgabe der Erfindung ist es deshalb, ein Verfahren zur Transcodierung eines Datenstroms zu schaffen, bei dem eine aufwandsgünstige Transcodierung bei der Verwendung wenigstens eines Kompressionsstandards mit Intra-Prädiktion ermöglicht wird.

Diese Aufgabe wird durch den unabhängigen Patentanspruch gelöst. Vorteilhafte Ausgestaltungen der Erfindung sind in den abhängigen Ansprüchen definiert.

Gemäß der Erfindung wird ein Verfahren zur Transcodierung eines Datenstroms bereitgestellt, bei dem ein mit einem ersten Codierverfahren codierter Eingabedatenstrom in einen mit einem zweiten Codierverfahren codierten Ausgabedatenstrom umgewandelt wird, wobei der Eingabedatenstrom erste Intrablöcke umfasst, die jeweils in einem ersten Prädiktionsmodus aus einer Mehrzahl von ersten Intra-Prädiktionsmodi codiert sind, und der Ausgabedatenstrom zweite Intrablöcke umfasst, die jeweils in einem zweiten Prädiktionsmodus aus einer Mehrzahl von zweiten Intra-Prädiktionsmodi codiert sind. Bei dem Verfahren sind die ersten Intra-Prädiktionsmodi und zweiten Intra-Prädiktionsmodi verschieden. Bei dem Verfahren werden mit Hilfe der ersten Prädiktionsmodi für einen oder mehrere erste Intrablöcke zweite Prädiktionsmodi für einen oder mehrere zweite Intrablöcke ermittelt, und die zweiten Intrablöcke werden mit den ermittelten zweiten Prädiktionsmodi codiert.

Der Erfindung liegt somit die Idee zugrunde, dass man mit Hilfe von Informationen aus dem ersten Codierverfahren, mit dem der zu transcodierende Datenstrom codiert ist, die Intra-Prädiktionsmodi für ein zweites Codierverfahren ermitteln kann, so dass keine Neuschätzung aller Prädiktionsmodi im zweiten Codierverfahren vorgenommen werden muss. Es werden hierbei die ersten Intra-Prädiktionsmodi des ersten Codierverfahrens als Informationen zur Ermittlung der zweiten Intra-Prädiktionsmodi verwendet.

In einer bevorzugten Ausführungsform der Erfindung werden für die Ermittlung der zweiten Prädiktionsmodi den ersten Intrablöcken zugeordnete Prädiktionsfehler berücksichtigt. Hierdurch wird ein weiteres Kriterium eingeführt, das bei der Ermittlung der zweiten Prädiktionsmodi mit berücksichtigt werden kann.

Ferner ist Teil der Erfindung, dass das erste Codierverfahren H.264 (siehe Dokument [6]), wobei die ersten Intrablöcke in diesem Verfahren mit Intra-Prädiktionsmodi im Ortsbereich codiert werden. Bei dem zweiten Codierverfahren handelt es sich um den Standard H. 263 (siehe Dokument [7]), bei dem die zweiten Intrablöcke mit Intra-Prädiktionsmodi im Frequenzbereich codiert werden. Bei einer Transcodierung von H.264 nach H.263 erfolgt die Ermittlung der zweiten Intra-Prädiktionsmodi aus den ersten Intra-Prädiktionsmodi vorzugsweise durch folgende Zuordnung:

- wenn ein Makroblock in H.264 mit dem INTRA16-Prädiktionsmodus HOR codiert ist, wird den entsprechenden vier (8x8)-Pixel-Blöcken in H.263 der Intra-Prädiktionsmodus HOR zugeordnet;
- wenn ein Makroblock in H.264 mit den INTRA16-Prädiktionsmodus DC oder PLANE codiert ist, wird den entsprechenden vier (8x8)-Pixel-Blöcken in H. 263 der Intra-Prädiktionsmodus DC zugeordnet;
- wenn ein Makroblock in H.264 mit dem INTRA16-Prädiktionsmodus VERT codiert ist, wird den entsprechenden vier (8x8)-Pixel-Blöcken in H.263 der Intra-Prädiktionsmodus VERT zugeordnet;
- wenn die (4x4)-Pixel-Blöcke eines Makroblocks in H.264 mit INTRA4-Prädiktionsmodi codiert sind, wird die Häufigkeit der Prädiktionsmodi in dem Makroblock ermittelt, wobei in Abhängigkeit von dem am häufigsten im Makroblock auftretenden Prädiktionsmodus folgende Zuordnung vorgenommen wird:

  - tritt der INTRA4-Prädiktionsmodus Hor oder HorU am häufigsten auf, wird den entsprechenden vier (8x8)-Pixel-Blöcken des Makroblocks in H. 263 der Intra-Prädiktiorismodus HOR zugeordnet;
  - tritt der INTRA4-Prädiktionsmodus DC oder HorD oder VerR oder DiagDR am häufigsten auf, wird den entsprechenden vier (8x8)-Pixel-Blöcken des Makroblocks in H.263 der Intra-Prädiktionsmodus DC zugeordnet;

- tritt der INTRA4-Prädiktionsmodus DiagDL oder VERT oder VerL am häufigsten auf, wird den entsprechenden vier (8x8)-Pixel-Blöcken des Makroblocks in H.263 der Intra-Prädiktionsmodus VERT zugeordnet.

Die Erfinder konnten nachweisen, dass mit dieser Zuordnung der in H.264 und H.263 verwendeten Intra-Prädiktionsmodi eine effiziente Transcodierung erreicht wird, deren Komplexität gegenüber bekannten Verfahren wesentlich vermindert ist.

Treten bei der zuletzt beschriebenen Ausführungsform der Erfindung INTRA4-Prädiktionsmodi mit der gleichen Häufigkeit während der Zuordnung der Prädiktionsmodi auf, wird derjenige Prädiktionsmodus für H. 263 ausgewählt, der den geringsten Codieraufwand erfordert. Dem Fachmann ist hierbei bekannt, welche Prädiktionsmodi am einfachsten zu codieren sind.

In einem Beispielsverfahren ist das erste Codierverfahren H.263, wobei die ersten Bildblöcke mit Intra-Prädiktionsmodi im Frequenzbereich codiert werden, und das zweite Codierverfahren ist H.264, bei die zweiten Intrablöcke mit Intra-Prädiktionsmodi im Ortsbereich codiert werden.

Bei der zuletzt beschriebenen Beispielsvefahren werden die zweiten Intra-Prädiktionsmodi aus den ersten Intra-Prädiktionsmodi wie folgt ermittelt:

- für jeden in einem ersten Intra-Prädiktionsmodus codierten (8x8)-Pixel-Block eines Makroblocks in H. 263 wird ein Prädiktionsfehler ermittelt;
- wenn der ermittelte Prädiktionsfehler wenigstens eines (8x8)-Pixel-Blocks des Makroblocks über einer vorgegebenen Schwelle liegt, werden die (8x8)-Pixel-Blöcke des Makroblocks in H.264 mit einem INTRA4-Prädiktionsmodus codiert, wobei für die (8x8)-Pixel-Blöcke, deren Prädiktionsfehler über der Schwelle liegt, eine Neuberechnung des Prädiktionsmodus in H.264 erfolgt, und den restlichen (8x8)-Pixel-Blöcke in H.264 jeweils der gleiche INTRA4-Prädiktionsmodus wie in H.263 zugeordnet wird;
- wenn die ermittelten Prädiktionsfehler aller (8x8)-Pixel-Blöcke des Makroblocks nicht über der vorgegebenen Schwelle liegen, wird dem Makroblock in H. 264 der gleiche INTRA16-Prädiktionsmodus wie den (8x8)-Pixel-Blöcken in H.263 zugeordnet.

Hierdurch wird erreicht, dass eine Neuberechnung des Prädiktionsmodus nur dann durchgeführt wird, wenn der Prädiktionsfehler sehr groß ist, und ansonsten in H.264 der gleiche Prädiktionsmodus wie in H.263 verwendet wird. Der Prädiktionsfehler wird dabei vorzugsweise durch eine Summation über die DCT-Koeffizienten des jeweiligen (8x8)-Pixel-Blocks des Makroblocks ermittelt.

In einem weiteren Beispiel wird ein Verfahren zur Transcodierung eines Datenstroms beschrieben, bei dem der mit dem ersten Codierverfahren codierte Eingabedatenstrom nicht notwendigerweise auch erste Intra-Prädiktionsmodi umfasst. Hierbei werden mit Hilfe von Bildinformation aus dem ersten Codierverfahren Intra-Prädiktionsmodi für ein zweites Codierverfahren ermittelt, wobei das zweite Codierverfahren eine Intra-Prädiktion unterstützt. Die mittels der Bildinformation ermittelten Prädiktionsmodi werden dann zur Codierung der Intrablöcke des Ausgabedatenstroms eingesetzt. Als Bildinformation aus dem ersten Codierverfahren werden in einer bevorzugten Ausführungsform insbesondere die in dem ersten Codierverfahren ermittelten DCT-Koeffizienten von Bildblöcken im Frequenzbereich eingesetzt.

In Analogie zu dem erfindungsgemäßen Verfahren können darüber hinaus für die Ermittlung der Prädiktionsmodi in dem ersten Codierverfahren ermittelte Prädiktionsfehler berücksichtigt werden.

Die Erfindung betrifft ferner eine Vorrichtung zur Transcodierung eines Datenstroms, wobei die Vorrichtung derart ausgestaltet ist, dass mit dieser Vorrichtung das oben beschriebene erfindungsgemäße Transcodierverfahren durchgeführt wird.

Ausführungsbeispiele der Erfindung werden nachfolgend anhand der beigefügten Zeichnungen detailliert beschrieben.

Es zeigen:

Figur 1    eine Schemaskizze zur Verdeutlichung des erfindungsgemäßen Verfahrens;

Figur 2    ein Diagramm, welche die mit der Erfindung erzielte Kompressionseffi- zienz im Vergleich zu bekannten Verfahren zeigt;

Figur 3    eine Schemaskizze, welche den Ablauf eines Beispielsverfahrens verdeutlicht; und

Figur 4    eine Skizze, welche einen Teilschritt des Verfah- rens gemäß Figur 3 detailliert verdeutlicht.

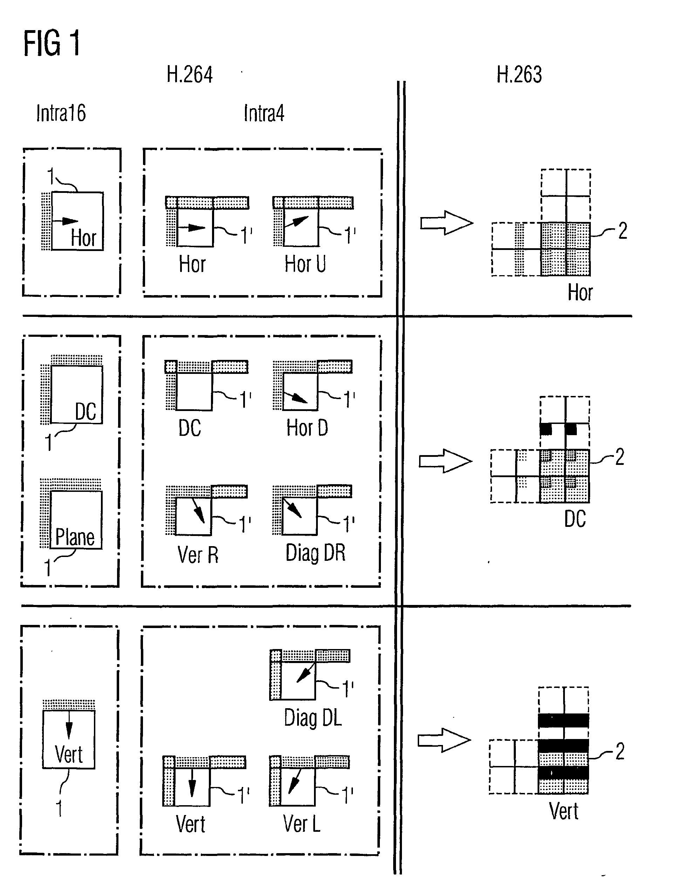

In Figur 1 ist ein Transcodierverfahren von dem Videocodierstandard H.264 (siehe Dokument [6]), zu dem Videocodierstandard H.263 (siehe Dokument [7]) verdeutlicht. In H.264 existieren eine Vielzahl von Intra-Prädiktionsmodi, welche dazu verwendet werden, die Makroblöcke eines Bildes, die aus 16x16 Pixeln bestehen, örtlich zu prädizieren. Man unterscheidet hierbei eine sog. INTRA16-Prädiktion, welche im linken Teil der Figur 1 dargestellt ist. Bei dieser Prädiktion werden die mit 1 bezeichneten Makroblöcke insgesamt prädiziert. Es gibt hierzu vier verschiedene Möglichkeiten, die in Figur 1 als HOR, DC, PLANE und VERT bezeichnet sind. Diese unterschiedlichen Prädiktionsmodi sind im Standard H.264 genau beschrieben, so dass auf die genauen Verfahren der in diesen Modi durchgeführten Prädiktionen nicht eingegangen wird. Es sei jedoch angemerkt, dass die unterschiedlichen Prädiktionen im Ortsbereich durchgeführt werden, wobei bei der horizontalen bzw. vertikalen Prädiktion HOR bzw. VERT als Prädiktionssignal die Differenz zwischen dem aktuell zu codierenden Pixel eines Makroblocks und dem in horizontaler bzw. vertikaler Richtung neben dem Makroblock liegenden Pixel ermittelt wird. Demgegenüber wird bei dem Prädiktionsmodus DC die Differenz zu einem Mittelwert von benachbarten Pixeln ermittelt.

Neben den soeben beschriebenen INTRA16-Prädiktionsmodi existieren unter H.264 auch sog. INTRA4-Prädiktionsmodi, bei denen die Prädiktion für einzelne (4x4)-Pixel-Subblöcke 1' eines Makroblocks durchgeführt wird (siehe mittlerer Bereich der Fig. 1). Bei den INTRA4-Prädiktionsmodi gibt es insgesamt neun Stück, die in Figur 1 als HOR, HorU, DC, HorD, VerR, DiagDR, DiagDL, VERT und VerL bezeichnet sind. Auf eine genaue Beschreibung dieser Prädiktionsmodi wird hier ebenfalls verzichtet, da diese Prädiktionsmodi dem Fachmann bekannt sind und insbesondere im Dokument [6] beschrieben sind.

Im rechten Teil der Figur 1 sind die unterschiedlichen Prädiktionsmodi in H.263 verdeutlicht, wobei es in diesem Standard lediglich die Intra-Prädiktionsmodi HOR, DC und VERT gibt, die ebenfalls hier nicht im Detail beschrieben werden. Eine genaue Beschreibung dieser Modi findet sich in Dokument [7]. Bei den Prädiktionsmodi in H.263 werden die mit dem Bezugszeichen 2 bezeichneten Makroblöcke örtlich prädiziert, wobei die Makroblöcke in H.263 als Pixelinformationen DCT-Koeffizienten (DCT = Discrete Cosine Transformation) enthalten, d.h. es handelt sich um Makroblöcke im Frequenzbereich.

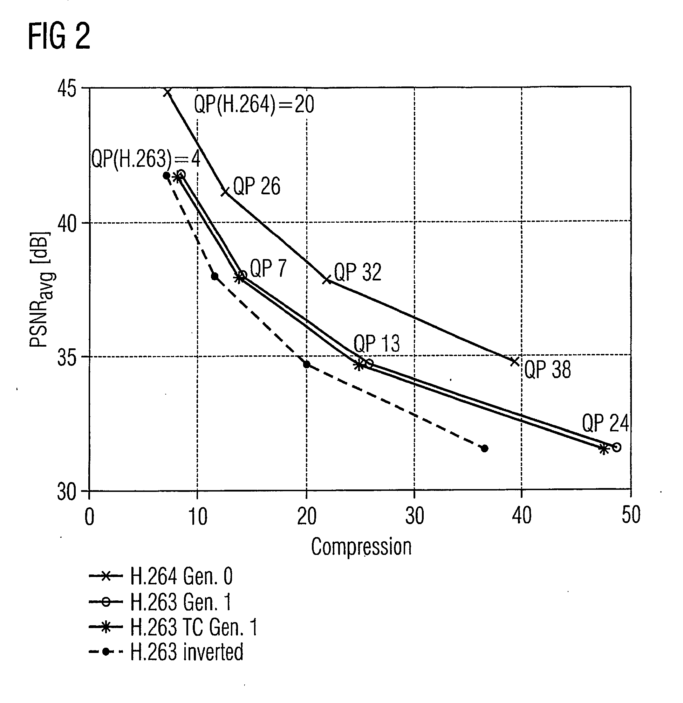

In Figur 1 ist mit den drei grau hinterlegten Pfeilen angedeutet, wie gemäß dem erfindungsgemäßen Verfahren den Prädiktionsmodi aus H.264 entsprechende Prädiktionsmodi aus H.263 zugeordnet werden. Die Erfinder konnten im Rahmen von Experimenten ermitteln, dass die in Figur 1 gezeigte Zuordnung gute Resultate liefert, wie weiter unten in Bezug auf Figur 2 beschrieben wird.

Gemäß der Figur 1 werden im INTRA16-Prädiktionsmodus HOR in H.264 codierte Makroblöcke in H. 263 auch im Prädiktionsmodus HOR codiert. Im INTRA16-Prädiktionsmodus DC bzw. Plane codierte Makroblöcke in H.264 werden in H.263 im Intra-Prädiktionsmodus DC codiert. Für im INTRA16-Prädiktionsmodus VERT in H.264 codierte Makroblöcke wird in H.263 der Prädiktionsmodus VERT verwendet. Bei einer INTRA4-Prädiktion wird zunächst für alle 16 (4x4)-Pixel-Subblöcke 1' eines Makroblocks untersucht, welcher Prädiktionsmodus am häufigsten auftritt. Tritt der Prädiktionsmodus HOR oder HorU am häufigsten auf, wird in H.263 mit dem Prädiktionsmodus HOR codiert. Tritt hingegen der Prädiktionsmodus DC oder HorD oder VerR oder DiagDR in H.264 am häufigsten auf, wird in H.263 mit dem Prädiktionsmodus DC codiert. Wenn jedoch der Prädiktionsmodus DiagDL oder VERT oder VerL in H.264 am häufigsten auftritt, wird in H.263 der Prädiktionsmodus VERT verwendet.

Sollte bei einer INTRA4-Prädiktion unter H.264 der Fall vorliegen, dass bestimmte Modi gleich häufig auftreten, wird in H.263 derjenige Modus verwendet, der den geringsten Codieraufwand mit sich bringt. Dem Fachmann ist bekannt, wie die einzelnen Modi in H.263 hinsichtlich des Codieraufwandes zu bewerten sind.

In Figur 2 ist ein Diagramm gezeigt, welches das Ergebnis des erfindungsgemäßen Verfahrens aus Figur 1 grafisch darstellt. Hierbei ist auf der Abszisse der Kompressionsfaktor (Faktor, um den die Ausgabedatei kleiner als die Eingabedatei ist) aufgetragen und auf der Ordinate ist das durchschnittliche PSNR in dB (PSNR = Peak Signal-to-Noise-Ratio) aufgetragen. Das PSNR steht für die Qualität des transcodierten Datenstroms. Die mit H.264 Gen.0 bezeichnete Kurve zeigt eine Videocodierung mit H.264, welche eine gute Kompression bei hoher Qualität aufweist. Die mit H.263 Gen.1 bezeichnete Kurve zeigt eine Transcodierung nach dem Stand der Technik, wobei ein mit H.264 codierter Datenstrom decodiert und anschließend in H.263 mittels vollständiger Neuberechnung der Prädiktion codiert wird. Demgegenüber zeigt die Kurve H.263 TC Gen.1 das Ergebnis des erfindungsgemäßen Verfahrens. Das Verfahren gemäß der Erfindung weist eine wesentlich geringere Komplexität als das Verfahren H.263 Gen.1 auf, da keine Neuberechnungen der Prädiktionen in H.263 mehr notwendig sind und diese Neuberechnungen ca. 90 % der Berechnungen der Transcodierung ausmachen. Wie der Figur 2 entnommen werden kann, weist das Verfahren H.263 TC Gen.1 trotz Komplexitätsverminderung ähnlich gute Ergebnisse wie das Verfahren H.263 Gen.1 auf. Das erfindungsgemäße Verfahren stellt somit aufgrund der Verringerung der Komplexität eine wesentliche Verbesserung gegenüber bekannten Verfahren dar.

Zusätzlich ist in Figur 2 noch das Ergebnis eines mit H.263 inverted bezeichneten Verfahrens dargestellt, wobei dieses Verfahren bei der Transcodierung einen gegenüber dem erfindungsgemäßen Verfahren entgegengesetzten Prädiktionsmodus in H.263 verwendet. Es zeigt sich, dass hier nicht die guten Ergebnisse wie beim Verfahren H.263 TC Gen.1 erreicht werden.

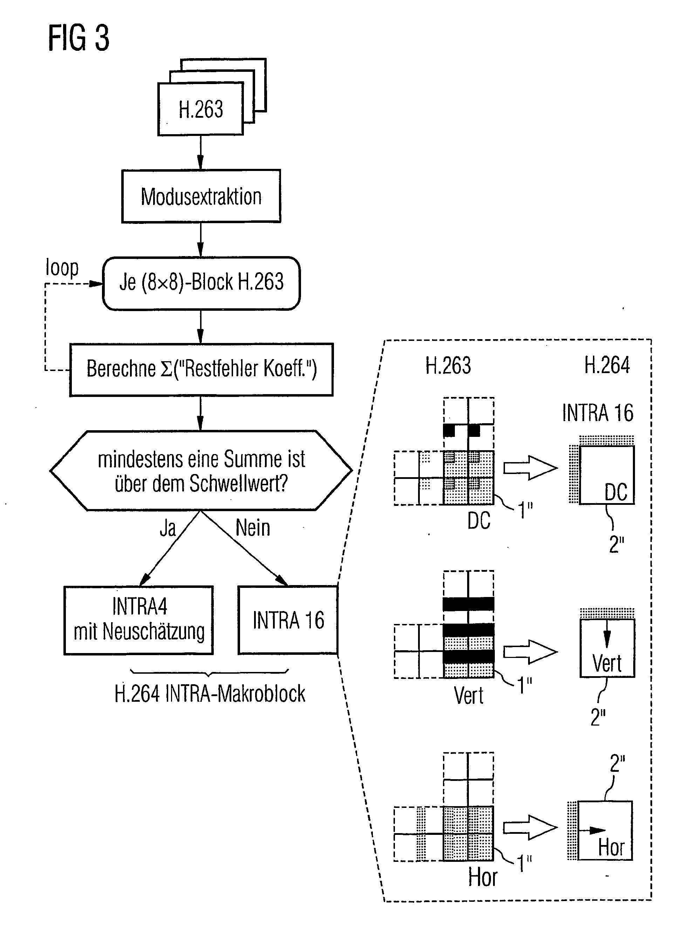

In Figur 3 ist schematisch ein Beispiel eines weiteren Verfahrens dargestellt. Bei diesem Verfahren werden Intraframe-codierte Bilder eines H.263-Datenstroms in einen H.264-Datenstrom transcodiert. Hierbei besteht das Problem, dass der Codierstandard H.264 eine wesentlich größere Anzahl von Intra-Prädiktionsmöglichkeiten als H.263 bietet, so dass eine entsprechende Zuordnung gegenüber dem Ausführungsbeispiel der Figur 1 anders gestaltet werden muss. Ziel ist es in dieser Ausführungsform, in den Fällen einer schlechten Vorhersage eines H.264-Prädiktionsmodus eine Neucodierung mit Neuschätzung des Prädiktionsmodus in H.264 durchzuführen. Dies entspricht dem Fall, dass der in H.264 verwendete Prädiktionsmodus nicht in H.263 zur Verfügung steht.

Wie dem linken Teil der Figur 3 entnommen werden kann, wird zur Transcodierung zunächst der für den entsprechenden Makroblock verwendete Modus extrahiert. Hierbei wird berücksichtigt, dass in H.263 ein Makroblock aus vier (8x8)-Pixel-Blöcken besteht, die im rechten Teil der Figur 3 als 1" bezeichnet sind. Für jeden dieser (8x8)-Blöcke wird in einem nächsten Schritt ein sog. Prädiktionsfehler berechnet, welcher die Summe aller Restfehlerkoeffizienten der Pixel des entsprechenden (8x8)-Blocks ist. Der Wert der Prädiktionsfehler wird für alle vier Blöcke eines Makroblocks zwischengespeichert und anschließend wird ermittelt, ob eine Summe der Restfehlerkoeffizienten über einem vorgegebenen Schwellwert liegt. Ist dies der Fall, werden die Bildblöcke in H.264 mit einem INTRA4-Prädiktionsmodus codiert, wobei für die (8x8)-Pixel-Blöcke, deren Prädiktionsfehler über der Schwelle liegt, eine Neuberechnung des Prädiktionsmodus in H.264 erfolgt.

Liegt hingegen für alle (8x8)-Pixel-Blöcke eines Makroblocks die Summe der Restfehlerkoeffizienten unter dem Schwellwert, wird in H.264 eine INTRA16-Codierung mit einem Prädiktionsmodus durchgeführt, dem Prädiktionsmodus der (8x8)-Pixel-Blöcke in H.263 entspricht. Dies ist nochmals im rechten Teil der Figur 3 dargestellt. Es ergibt sich, dass im Falle, wenn INTRA16-codiert wird, dem für die (8x8)-Pixel-Blöcke 1" in H.263 verwendeten Prädiktionsmodus DC der entsprechende INTRA16-Prädiktionsmodus DC für den (16x16)-Pixel-Makroblock 2' in H.264 zugeordnet wird. Ebenso wird dem H.263 Prädiktionsmodus VERT der entsprechende Prädiktionsmodus VERT in H.264 zugeordnet. Das gleiche gilt für den Prädiktionsmodus HOR in H.263, dem in H.264 der entsprechende INTRA16-Prädiktionsmodus HOR zugeordnet wird.

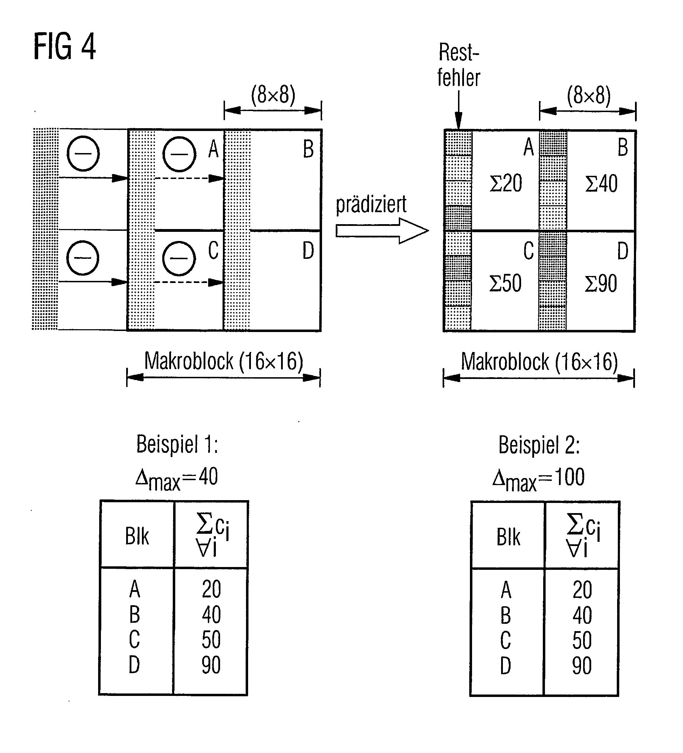

In Figur 4 ist im oberen Bereich grafisch die zuvor beschriebene Ermittlung der Restfehlerkoeffizienten dargestellt, wobei ein aus (8x8)-Pixel-Blöcken A, B, C und D bestehender Makroblock betrachtet wird und die Restfehler schattiert angedeutet sind. Im Beispiel 1 der Fig. 4 wird der Schwellwert gemäß Fig. 3 mit Δmax = 40 festgesetzt. Für die einzelnen (8x8)-Pixel-Blöcke des Makroblocks ergibt sich gemäß Beispiel 1, dass die Summe der Restfehler $\sum_{\forall i} C_i$ für die Blöcke C und D über dem Schwellwert 40 liegen. Daraufhin werden alle Blöcke A, B, C und D INTRA4-codiert, wobei jedoch nur für die Blöcke C und D eine Neuschätzung des Prädiktionsmodus vorgenommen wird. Demgegenüber wird für die Blöcke A und B der Prädiktionsmodus aus H.263 bei der Transcodierung einfach übernommen. Im Beispiel 2 der Fig. 4 liegt der Schwellwert bei 100, so dass für alle (8x8)-Pixel-Blöcke die Summe der Restfehler unter dem Schwellwert liegt. Als Konsequenz erfolgt eine INTRA16-Codierung in H.264.

Gemäß einem weiteren Beispiel eines Verfahrens zur Transcodierung, welches nicht grafisch dargestellt ist, kann das Verfahren zur Transcodierung auch dann eingesetzt werden, wenn von einem blockbasierten Codierstandard ohne örtliche Intra-Prädiktion zu einem Standard mit Intra-Prädiktion transcodiert wird. Als Beispiel hierfür könnte eine mögliche Transcodierung von MPEG-1 oder MPEG-2 hin zu H.263 oder H.264 dienen. In dieser Ausführungsform besteht die Möglichkeit, die Prädiktionsrichtung über weitere Codierinformationen zu ermitteln, wie z.B. die Differenz des DC-Anteils der DCT-Koeffizienten des Makroblocks. Es könnte beispielsweise die Prädiktionsrichtung in Analogie zum MPEG-4-Standard ermittelt werden und anschließend in H.263 eingesetzt werden. Statt der Differenz des DC-Anteils der DCT-Koeffizienten könnte ein bevorzugter Prädiktionsmodus auch aus dem AC-Anteil der DCT-Koeffizienten abgeleitet werden. Bei einem Verfahren, bei dem nach H.264 transcodiert wird, sollte zusätzlich bei der Ermittlung des Prädiktionsmodus der Prädiktionsfehler einbezogen werden, wobei hier analog gemäß der in Figur 3 dargestellten Vorgehensweise vorgegangen wird.

Literaturverzeichnis:

[1] P.N. Tudor, O. H. Werner: Real-Time Transcoding of MPEG-2 Video Bit Streams; International Broadcasting Convention; S. 286-301; Amsterdam; September 1997

[2] O. H. Werner: Generic Quantiser for Transcoding of Hybrid Video; Proceedings of the Picture Coding Symposium; Berlin; September 1997

[3] N. Björk, Ch. Christopoulos: Video Transcoding for Universal Multimedia Access; Proceedings of the ACM Multimedia 2000; Marina del Rey; Oct.-Nov. 2000

[4] N. Feamster, S. Wee: An MPEG-2 to H.263 Transcoder; Proceedings of Symposium and Voice, Video, and Data Communications; Boston; September 1999

[5] J. Xin, et al.:Motion Reestimation for MPEG-2 to MPEG-4 Simple Profile Transcoding; Proceedings of the International Packet Video Workshop; 2002

[6] ITU-T Rec. H.264

[7] ITU-T Rec. H.263

**Patentansprüche**

1. Verfahren zur Transcodierung eines Datenstroms, der ein oder mehrere codierte digitalisierte Bilder umfasst:

    - bei dem ein mit einem ersten Codierverfahren codierter Eingabedatenstrom in einen mit einem zweiten Codierverfahren codierten Ausgabedatenstrom umgewandelt wird, wobei der Eingabedatenstrom erste Intrablöcke (1, 1', 1") umfasst, die jeweils in einem ersten Prädiktionsmodus aus einer Mehrzahl von ersten Intra-Prädiktionsmodi codiert sind, und der Ausgabedatenstrom zweite Intrablöcke (2, 2") umfasst, die jeweils in einem zweiten Prädiktionsmodus aus einer Mehrzahl von zweiten Intra-Prädiktionsmodi codiert sind;
    - bei dem die ersten Intra-Prädiktionsmodi und die zweiten Intra-Prädikitionsmodi verschieden sind;
    - bei dem mithilfe des jeweiligen ersten Prädiktionsmodus für einen oder mehrere erste Intrablöcke (1, 1', 1") jeweils ein zweiter Prädiktionsmodus für einen oder mehrere zweite Intrablökke (2, 2") ermittelt werden;
    - bei dem die zweiten Intrablöcke (2, 2") mit dem jeweils ermittelten zweiten Prädiktionsmodus codiert werden,
    - bei dem das erste Codierverfahren H.264 ist, wobei die ersten Intrablöcke (1, 1', 1") jeweils mit einem der INTRA 16-Prädiktionsmodi HOR, DC, VERT, PLANE oder mit einem INTRA 4-Prädiktionsmodus HOR, HorU, DC, HorD, VerR, DiagDR, DiagDL, VERT, VerL als erste Intra-Prädiktionsmodi im Ortsbereich codiert werden, und das zweite Codierverfahren H.263 ist, bei dem die zweiten Intrablöcke (2, 2") mit Intra-Prädiktionsmodi HOR, DC, VERT als zweite Intra-Prädiktionsmodi im Frequenzbereich codiert werden,
    - bei dem die zweiten Intra-Prädiktionsmodi aus den ersten Intra-Prädiktionsmodi durch folgende Zuordnung ermittelt werden:

        - wenn ein Makroblock in H.264 mit dem INTRA16-Prädiktionsmodus HOR codiert ist, wird den entsprechenden vier (8x8)-Pixel-Blökken in H.263 der Intra-Prädiktionsmodus HOR zugeordnet;

        - wenn ein Makroblock in H.264 mit den INTRA16-Prädiktionsmodus DC oder PLANE codiert ist, wird den entsprechenden vier (8x8)-Pixel-Blökken in H.263 der Intra-Prädiktionsmodus DC zugeordnet;
        - wenn ein Makroblock in H.264 mit dem INTRA16-Prädiktionsmodus VERT codiert ist, wird den entsprechenden vier (8x8)-Pixel-Blökken in H.263 der Intra-Prädiktionsmodus VERT zugeordnet;
        - wenn die (4x4)-Pixel-Blöcke eines Makroblocks in H.264 mit INTRA4-Prädiktionsmodi codiert sind, wird die Häufigkeit der Prädiktionsmodi in dem Makroblock ermittelt, wobei in Abhängigkeit von dem am häufigsten im Makroblock auftretenden Prädiktionsmodus folgende Zuordnung vorgenommen wird:

            - tritt der INTRA4-Prädiktionsmodus Hor oder HorU am häufigsten auf, wird den entsprechenden vier (8x8)-Pixel-Blöcken des Makroblocks in H.263 der Intra-Prädiktionsmodus HOR zugeordnet;
            - tritt der INTRA4-Prädiktionsmodus DC oder HorD oder VerR oder DiagDR am häufigsten auf, wird den entsprechenden vier (8x8)-Pixel-Blöcken des Makroblocks in H.

263 der Intra-Prädiktionsmodus DC zugeordnet;
- tritt der INTRA4-Prädiktionsmodus DiagDL oder VERT oder VerL am häufigsten auf, wird den entsprechenden vier (8x8)-Pixel-Blöcken des Makroblocks in H.263 der Intra-Prädiktionsmodus VERT zugeordnet.

2. Verfahren nach Anspruch 1, bei dem beim Auftreten von INTRA4-Prädiktionsmodi mit gleicher Häufigkeit während der Zuordnung der Prädiktionsmodi derjenige Prädiktionsmodus für H.263 ausgewählt wird, der den geringsten Codieraufwand erfordert.

3. Verfahren nach Anspruch 1 oder 2, bei dem für die Ermittlung der zweiten Prädiktionsmodi den ersten Intrablöcken (1, 1', 1") zugeordnete Prädiktionsfehler berücksichtigt werden.

4. Vorrichtung zur Transcodierung eines Datenstroms, der ein oder mehrere codierte digitalisierte Bilder umfasst, wobei die Vorrichtung derart ausgestaltet ist, dass ein Verfahren nach einem der vorhergehenden Ansprüche durchgeführt wird.

**Claims**

1. Method for transcoding a data stream comprising one or more coded digitized images:

- wherein an input data stream coded using a first coding method is converted into an output data stream coded using a second coding method, the input data stream comprising first intrablocks (1, 1', 1") which are in each case coded in a first prediction mode from a plurality of first intra-prediction modes, and the output data stream comprising second intra-blocks (2, 2") which are in each case coded in a second prediction mode from a plurality of second intra-prediction modes;
- wherein the first intra-prediction modes and the second intra-prediction modes are different;
- wherein a second prediction mode for one or more second intra-blocks (2, 2") are determined with the aid of the first prediction mode for one or more first intra-blocks (1, 1', 1");
- wherein the second intra-blocks (2, 2") are coded using the determined second prediction modes,
- wherein the first coding method is H.264, the first intra-blocks (1, 1', 1") being coded using one of the INTRA16 prediction modes HOR, DC, VERT, PLANE or using an INTRA4 prediction mode HOR, HorU, DC, HorD, VerR, DiagDR, DiagDL, VERT, Verl as first intra-prediction modes in the local area, and the second coding method is H.263, the second intra-blocks (2, 2") being coded using intra-prediction modes HOR, DC, VERT as second intra-prediction modes in the frequency domain,
- wherein the second intra-prediction modes are determined from the first intra-prediction modes by means of the following assignment:

- if a macroblock is coded in H.264 with the INTRA16-prediction mode HOR, the intra-prediction mode HOR is assigned to the corresponding four (8x8) pixel blocks in H.263
- if a macro block is coded in H.264 using the INTRA16 prediction mode DC or PLANE, the intra-prediction mode DC is assigned to the corresponding four (8x8) pixel blocks in H.263;
- if a macro block is coded in H.264 using the INTRA16 prediction mode VERT, the intra-prediction mode VERT is assigned to the corresponding four (8x8) pixel blocks in H.263;
- if the (4x4) pixel blocks of a macro block are coded in H.264 using INTRA4 prediction modes, the frequency of the prediction modes in the macro block is determined, the following assignment being performed as a function of the prediction mode occurring most frequently in the macro block:

- if the INTRA4 prediction mode Hor or HorU occurs most frequently, the intra-prediction mode HOR is assigned to the corresponding four (8x8) pixel blocks of the macro block in H.263;
- if the INTRA4 prediction mode DC or HorD or VerR or DiagDR occurs most frequently, the intra-prediction mode DC is assigned to the corresponding four (8x8) pixel blocks of the macro block in H.263;
- if the INTRA4 prediction mode DiagDL or VERT or VerL occurs most frequently, the intra-prediction mode VERT is assigned to the corresponding four (8x8) pixel blocks of the macro block in H.263.

2. Method according to claim 1, wherein when INTRA4 prediction modes occur with the same frequency during the assignment of the prediction modes, the prediction mode requiring the least coding effort is selected for H.263.

3. Method according to claim 1 or 2, wherein prediction errors assigned to the first intra-blocks (1, 1', 1") are taken into account in order to determine the second prediction modes.

**4.** Device for transcoding a data stream comprising one or more coded digitized images, the device being embodied in such a way that a method according to one of the preceding claims is performed.

**Revendications**

**1.** Procédé pour transcoder un flux de données comprenant une ou plusieurs images numérisées codées, dans lequel

- un flux de données d'entrée codé selon un premier procédé de codage est converti en un flux de données de sortie codé selon un deuxième procédé de codage, le flux de données d'entrée comprenant des premiers intra-blocs (1, 1', 1") qui sont respectivement codés selon un premier mode de prédiction sélectionné parmi une pluralité de premiers modes d'intra-prédiction et le flux de données de sortie comprenant des deuxièmes intra-blocs (2, 2") qui sont respectivement codés selon un deuxième mode de prédiction sélectionné parmi une pluralité de deuxièmes modes d'intra-prédiction,
- les premiers modes d'intra-prédiction et les deuxièmes modes d'intra-prédiction sont différents,
- respectivement un deuxième mode de prédiction pour un ou plusieurs deuxièmes intra-blocs (2, 2") est déterminé à l'aide du premier mode de prédiction respectif pour un ou plusieurs premiers intra-blocs (1, 1', 1"),
- les deuxièmes intra-blocs (2, 2") étant codés selon le deuxième mode de prédiction respectivement déterminé,
- le premier procédé de codage étant H.264, les premiers intra-blocs (1, 1', 1") étant codés respectivement selon l'un des modes de prédiction INTRA16 HOR, DC, VERT, PLANE ou selon un mode de prédiction INTRA4 HOR, HorU, DC, HorD, VerR, DiagDR, DiagDL, VERT, VerL en tant que premiers modes d'intra-prédiction dans l'espace et le deuxième procédé de codage étant H.263, dans lequel les deuxièmes intra-blocs (2, 2") sont codés selon des modes d'intra-prédiction HOR, DC, VERT en tant que deuxièmes modes d'intra-prédiction en fréquence,
- les deuxièmes modes d'intra-prédiction étant déterminés à partir des premiers modes d'intra-prédiction par l'association suivante :

- si un macro-bloc est codé selon H.264 selon le mode de prédiction INTRA16 HOR, le mode d'intra-prédiction HOR est associé aux quatre blocs de (8x8) pixels correspondants selon H.263;
- si un macro-bloc est codé selon H.264 selon le mode de prédiction INTRA16 DC ou PLANE, le mode d'intra-prédiction DC est associé aux quatre blocs de (8x8) pixels correspondants selon H.263;
- si un macro-bloc est codé selon H.264 selon le mode de prédiction INTRA16 VERT, le mode d'intra-prédiction VERT est associé aux quatre blocs de (8x8) pixels correspondants selon H.263;
- si les blocs de (4x4) pixels d'un macro-bloc sont codés selon H.264 selon des modes de prédiction INTRA4, la fréquence des modes de prédiction dans le macro-bloc est déterminée, l'association suivante étant opérée en fonction du mode de prédiction qui se présente le plus souvent dans le macro-bloc :

- si le mode de prédiction INTRA4 Hor ou HorU se présente le plus souvent, le mode d'intra-prédiction HOR est associé aux quatre blocs de (8x8) pixels correspondants du macro-bloc selon H.263 ;
- si le mode de prédiction INTRA4 DC ou HorD ou VerR ou DiagDR se présente le plus souvent, le mode d'intra-prédiction DC est associé aux quatre blocs de (8x8) pixels correspondants du macro-bloc selon H.263 ;
- si le mode de prédiction INTRA4 DiagDL ou VERT ou VerL se présente le plus souvent, le mode d'intra-prédiction VERT est associé aux quatre blocs de (8x8) pixels correspondants du macro-bloc selon H.263.

**2.** Procédé selon la revendication 1, dans lequel est sélectionné, pour H.263, le mode de prédiction qui exige le moindre effort de codage lorsque des modes de prédiction INTRA4 se présentent à la même fréquence pendant l'association des modes de prédiction.

**3.** Procédé selon la revendication 1 ou 2, dans lequel des erreurs de prédiction associées aux premiers intra-blocs (1, 1', 1") sont prises en compte pour la détermination des deuxièmes modes de prédiction.

**4.** Dispositif de transcodage d'un flux de données qui comprend une ou plusieurs images numérisées codées, le dispositif étant réalisé de manière telle qu'un procédé selon l'une des revendications précédentes est exécuté.

# FIG 1

H.264

H.263

Intra16                    Intra4

Hor

Hor        Hor U

Hor
2

DC

DC        Hor D

Plane

Ver R      Diag DR

DC
2

Vert

Diag DL

Vert        Ver L

Vert
2

# FIG 2

# FIG 3

H.263

Modusextraktion

loop → Je (8×8)-Block H.263

Berechne Σ("Restfehler Koeff.")

mindestens eine Summe ist
über dem Schwellwert?

Ja / Nein

INTRA4
mit Neuschätzung

INTRA 16

H.264 INTRA-Makroblock

H.263          H.264

INTRA 16

DC → DC
1"      2"

Vert → Vert
1"      2"

Hor → Hor
1"      2"

# FIG 4

Beispiel 1:

$\Delta_{max} = 40$

| Blk | $\sum\limits_{\forall i} c_i$ |
|-----|-------------------------------|
| A | 20 |
| B | 40 |
| C | 50 |
| D | 90 |

Beispiel 2:

$\Delta_{max} = 100$

| Blk | $\sum\limits_{\forall i} c_i$ |
|-----|-------------------------------|
| A | 20 |
| B | 40 |
| C | 50 |
| D | 90 |

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **Tudor et al.** Real-Time Transcoding of MPEG-2 Video Bit Streams. *International Broadcasting Convention,* September 1997, 296-301
- **P.N. Tudor ; O. H. Werner.** Real-Time Transcoding of MPEG-2 Video Bit Streams. *International Broadcasting Convention,* September 1997, 286-301
- **O. H. Werner.** Generic Quantiser for Transcoding of Hybrid Video. *Proceedings of the Picture Coding Symposium,* September 1997
- **N. Björk ; Ch. Christopoulos.** Video Transcoding for Universal Multimedia Access. *Proceedings of the ACM Multimedia 2000,* Oktober 2000
- **N. Feamster ; S. Wee.** An MPEG-2 to H.263 Transcoder. *Proceedings of Symposium and Voice, Video, and Data Communications,* September 1999
- **J. Xin et al.** Motion Reestimation for MPEG-2 to MPEG-4 Simple Profile Transcoding. *Proceedings of the International Packet Video Workshop,* 2002